Europäisches Patentamt

European Patent Office

Office européen des brevets

(11) Publication number: **0 287 280**
**A2**

# EUROPEAN PATENT APPLICATION

(21) Application number: 88303123.9

(22) Date of filing: 07.04.88

(51) Int. Cl.⁴: **G11B 5/84**

(30) Priority: 07.04.87 JP 84964/87

(43) Date of publication of application:
19.10.88 Bulletin 88/42

(84) Designated Contracting States:
DE GB

(71) Applicant: **Hitachi Maxell Ltd.**
**No 1-1-88, Ushitora Ibaraki-shi**
**Osaka-fu(JP)**

(72) Inventor: **Maro, Tsuyoshi**
**1468-5, Furumagi Ishigemachi**
**Yuki-gun Ibaraki-ken(JP)**
Inventor: **Kitakami, Osamu**
**7-13406, Togashira-7-chome**
**Toride-shi(JP)**
Inventor: **Fujiwara, Hideo**
**3-16 Kubogaoka-3-chome Moriyamachi**
**Kitasoma-gun Ibaraki-ken(JP)**

(74) Representative: **Cresswell, Thomas Anthony**
**et al**
**J.A. Kemp & Co. 14 South Square Gray's Inn**
**London WC1R 5EU(GB)**

(54) **Magnetic recording medium process for producing the same.**

(57) A magnetic recording medium comprises a non-magnetic substrate, a composite magnetic film composed of columnar ferromagnetic particles and an organic polymer surrounding the ferromagnetic particles as a recording magnetic layer, and an underlayer acting as crystal growth nuclei for the columnar ferromagnetic particles provided between the non-magnetic substrate and the composite magnetic film, the columnar ferromagnetic particles in the composite magnetic film being oriented in a direction substantially perpendicular to the film surface or at a predetermined angle thereto and has distinguished magnetic characteristics and recording-reproduction characteristics and very high durability and reliability.

## MAGNETIC RECORDING MEDIUM AND PROCESS FOR PRODUCING THE SAME

### BACKGROUND OF THE INVENTION

This invention relates to a magnetic recording medium and more particularly to a magnetic recording medium having a metal-polymer composite magnetic film composed of ferromagnetic particles and an organic polymer and having distinguished magnetic characteristics and recording-reproduction characteristics and an improvement of a process for producing the magnetic recording medium.

With recent keen demands for high density recording, magnetic recording media of ferromagnetic film type without any binder have been developed as a magnetic recording medium and various improvements and researches have been so far made for their practical applications. However, as the magnetic recording media of thin ferromagnetic film type, a film of ferromagnetic metal such as Co-Ni, Co-Cr, Co-Ni-P, etc., or a film of ferromagnetic ferrite such as γ-iron oxide, Ba ferrite, etc. is usually used, and thus the rigidity of the ferromagnetic thin film is considerably higher than that of the magnetic recording layer of coating type with a binder. That is, floppy disks, vapor-deposited tapes, etc. having a thin ferromagnetic film as the magnetic recording layer formed on a polymer film as a substrate have a poor sliding resistance than that of the magnetic recording media of coating type with a binder, and in case of rigid disks, scratches, as formed thereon by positional changes of a magnetic head, CSS (contact-start-step), etc., are so hard, as compared with those formed on a magnetic recording medium of coating type with a binder that the magnetic head is sucesptible to a crash by the scratches. In order to solve these problems, various lubricants are applied to the magnetic recording layer composed of a thin ferromagnetic film or a protective film of silicon oxide or carbon is provided thereon. However, such new problems as larger spacing loss and lower recording-reproduction characteristics are brought about thereby. In order to suppress the spacing loss, the thickness of the protective film must be made smaller, but the durability of the protective film will be lowered to the contrary.

To solve these problems, a magnetic recording layer of composite structure made by making ferromagnetic columnar particles grow on a non-magnetic substrate and filling clearances between the particles with an organic polymer, that is, the so called metal-polymer composite magnetic film, has been developed, whereby the flexibility of the magnetic recording layer has been improved and also the durability against the sliding contact with a magnetic head has been remarkably increased, as compared with a magnetic recording medium having a magnetic recording layer composed only of the ferromagnetic film. In order to increase the reproduction output at the high density recording and minimize dropouts from the magnetic recording medium having the metal-polymer composite magnetic film, the packing ratio of the ferromagnetic particles that constitute the magnetic recording layer must be 40% by volume or more and must be uniformly distributed.

The metal-polymer composite magnetic film can be formed by applying a dispersion of ferromagnetic particles in a binder to a substrate, but the dispersion has failed to meet the necessary conditions that the ferromagnetic particles be uniformly dispersed. Thus, a process for forming a metal-polymer composite magnetic film having uniformly dispersed ferromagnetic particles by depositing a ferromagnetic metal and an organic polymer onto a non-magnetic substrate at the same time by vapor deposition has been proposed (Japanese Patent Publication No. 57-3137). However, the process based on the mere vapor deposition has such problems that the amount of the organic polymer to be used is increased and the orientation of the ferromagnetic particles is disturbed, lowering the magnetic characteristics and deteriorating the recording-reproduction characteristics.

In order to improve the deterioration of magnetic characteristics due to the disturbance in the orientation of columnar ferromagnetic particles in the metal-polymer composite magnetic film formed according to the prior art vapor deposition process, the present inventors previously proposed a magnetic recording medium with improved magnetic characteristics and recording-reproduction characteristics by providing an orientation-controlling layer between the substrate and the metal-polymer composite magnetic film and making columnar ferromagnetic particles in the composite magnetic film epitoxially grow, thereby improving the degree of orientation, where a difference between the lattice constant of the orientation-controlling layer and the lattice constant of the columnar ferromagnetic particles formed thereon is made to fall within a predetermined range and the columnar ferromagnetic particles are made to epitoxially grow on the orientation-controlling layer [Japanese Patent Application Kokai (Laid-open) No. 63-56813]. However, it has been found that, when an orientation-controlling layer is provided on a substrate and a metal-polymer composite magnetic film, for example, a metal-polymer composite film of Co-Cr columnar particles and polyethylene, is formed thereon by simultaneous vapor deposition of Co-Cr and polyethylene, the diameter of Co-Cr columnar particles will be abnormally smaller with increasing amount of polyethylene, and the magnetic characteristics will be deteriorated, particularly the coercive force Hc and the recording-reproduction characteristics will be lowered.

## SUMMARY OF THE INVENTION

An object of the present invention is to solve such a problem that the diameter of the columnar ferromagnetic particles is diminished when a metal-polymer composite magnetic film is formed by vapor deposition and provide a magnetic recording medium having a metal-polymer composite magnetic film with distinguished magnetic characteristics and recording-reproduction characteristics and a process for producing the magnetic recording medium.

The object of the present invention can be attained by forming an underlayer as crystal growth nuclei for the columnar ferromagnetic particles on a non-magnetic substrate by vapor deposition including vacuum vapor deposition, ion plating, high frequency ion plating, ionized cluster beam, sputtering, plasma polymerization and chemical vapor deposition (CVD), and the simultaneously depositing a ferromagnetic metal and an organic polymer (polymer) onto the underlayer by the vapor deposition, while filling clearances between the columnar ferromagnetic particles of predetermined diameter oriented in a direction substantially perpendicular to the layer surface or at a predetermined angle, for example, 70° or 55°, to the layer surface with the organic polymer, thereby forming a magnetic recording layer of metal-polymer composite structure.

In the formation of the present metal-polymer composite magnetic film, passing of a vapor stream of organic polymer for the vapor deposition through a plasma or irradiation of ionizing beam such as $\alpha$-rays, $\beta$-rays, etc., or electromagnetic beam such as microwave, ultraviolet rays, X-rays, $\gamma$-rays, etc., or proton beam, or neutron beam to promote polymerization of monomer, oligomer, etc. in the deposited organic polymer is an effective means for increasing the adhesion of vapor-deposited polymer and also for improving the mechanical durability.

The organic polymer may be introduced into the vapor deposition chamber as its monomer or oligomer in the form of a gas or may be placed in the vapor deposition chamber in the form of a liquid or solid and evaporated, decomposed or sublimed by heating, sputtering, etc.

Since the magnetic recording medium having a metal-polymer composite magnetic film prepared according to the present invention has an underlayer acting as crystal growth nulei for columnar ferromagnetic particles, the diameter of the columnar ferromagnetic particles growing on the underlayer will be never diminished even with increasing amount of the organic polymer. Why the diameter of the columnar ferromagnetic particles will be never diminished is that the underlayer acts as crystal growth nuclei for the columnar ferromagnetic particles in the metal-polymer composite magnetic film formed on the underlayer, and any material can be used for the underlayer and its composition is not limited, so long as it has such an action and preferable examples of materials for the underlayer acting as crystal growth nuclei for the columnar ferromagnetic particles for use in the present invention are the same materials as those of the columnar ferromagnetic particles which constitute the metal-polymer composite magnetic film, or materials capable of making the columnar ferromagnetic particles epitaxially grow in the composite magnetic film, for example, at least one of Ti, Sc, Ta, Ge, etc. for the Co-Cr alloy; MnZn ferrite, etc. for the Ba ferrite; amorphous materials such as Co-Nb-Zr, etc., soft magnetic materials such as Ni-Fe, Co-Ni-Fe, etc. Use of the soft magnetic material as the material for the underlayer is also effective for stabilizing the recording magnetization owing to the soft magnetism of the underlayer, thereby improving the recording-reproduction characteristics at the actual magnetic recording in addition to the advantage that the diameter of the columnar ferromagnetic particles will be never diminished.

The thickness of the underlayer for controlling the diameter of the columnar ferromagnetic particles in the metal-polymer composite magnetic film is 50 to 5,000 Å, preferably 100 to 2,000 Å. Below 50 Å, formation of nuclei for making the columnar ferromagnetic particles of larger diameter grow in the metal-polymer composite magnetic film without any abnormal reduction in the diameter is not satisfactory, whereas above 5,000 Å the flexibility of the magnetic recording medium itself is lowered. However, in case of a rigid disk, an underlayer having any desired thickness that makes the columnar ferromagnetic particles of larger diameter grow on the underlayer must be formed on the substrate. That is, the thickness of the underlayer has no upper limit in that case.

Ferromagnetic materials that can form columnar ferromagnetic particles in the metal-polymer composite magnetic film according to the present invention include simple metals such as Co, Ni, Fe, etc.; alloys containing the metals as the main components, for example, such alloys as Fe-Co, Fe-Si, Fe-Rh, Fe-V, Fe-Ti, Fe-Co-Cr, Co-P, Co-B, Co-Si, Co-V, Co-Y, Co-Sm, Co-Mn, Co-Pd, Co-Pt, Co-Ti, Co-Fe, Co-Ni, Co-Ni-P, Co-Ni-B, Co-Cr, Co-Ni-Cr, Co-Ni-Ag, Co-Ni-Pd, Co-Ni-Zn, Co-Cu, Co-Ni-Cu, Co-W, Co-Ni-W, Co-Mn-P, Co-Sm-Cu, Co-Ni-Zn-P, Co-Ni-Mo-Cr, Co-V-Cr, etc.; oxides such as Ba ferrite, $\gamma$-Fe$_2$O$_3$, Fe$_3$O$_4$, etc.; and nitrides of Fe, Co, Ni, etc.

Organic polymers for the metal-polymer composite magnetic film according to the present invention include various organic polymers having various degrees of polymerization, for example, polyethylene, polyethylene terephthalate, polypropylene, polystyrene, polybutadiene, polycarbonate, polyamide, polyimide, polyvinyl chloride, polyvinyl acetate, saturated polyester, unsaturated polyester, polyurethane, silicon-based polymers, fluorine-based polymers such as polytetrafluoroethylene, etc., which have various degrees of polymerization, or their copolymers or their mixtures.

In the present invention, monomers, oligomers and polymers having various degrees of polymerization can be used as the materials for the organic polymer and may be introduced into a vapor deposition chamber in the form of a gas, or placed in the vapor deposition chamber in the form of a liquid or solid, and evaporated, decomposed or sublimed by heating, sputtering, etc. to deposit it onto the underlayer.

The present invention will be described in detail below, referring to Examples and Drawings.

## BRIEF DESCRIPTION OF THE DRAWINGS

Fig. 1 is a schematic, cross-sectional view of the structure of a magnetic recording medium according to one embodiment of the present invention.

Fig. 2 is a schematic view of the structure of a vacuum vapor deposition apparatus used in Examples 1 and 2.

Fig. 3 is a diagram showing recording-reproduction characteristics of the magnetic recording medium prepared in Example 2.

Fig. 4 is a schematic view of the structure of a sputtering apparatus used in Example 3.

## PREFERRED EMBODIMENTS OF THE INVENTION

Example 1

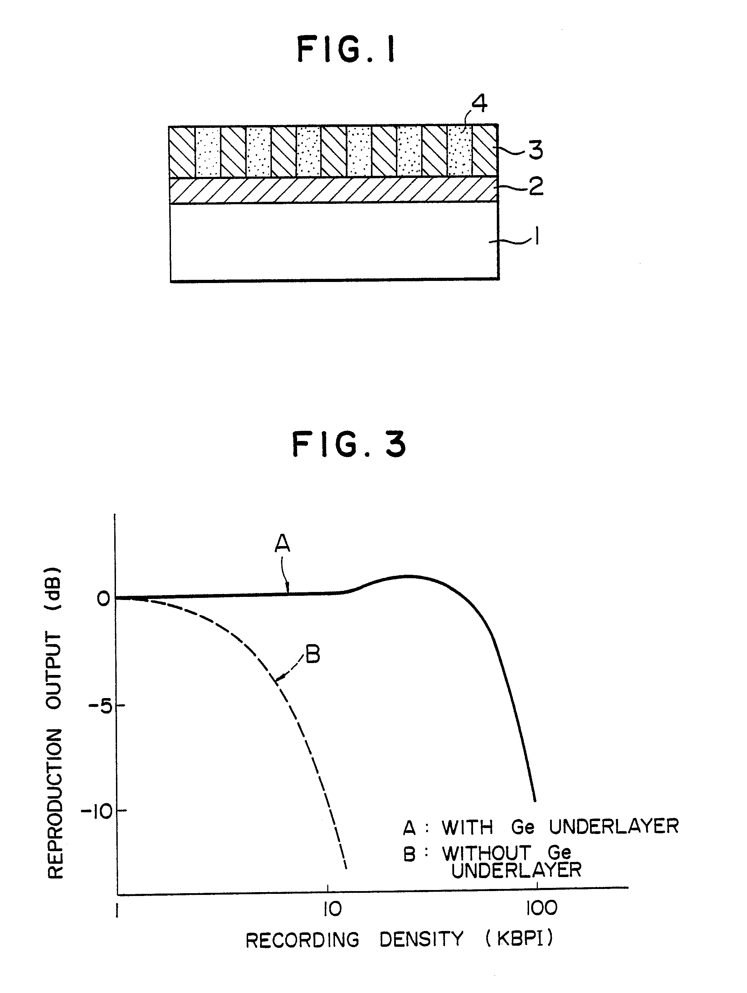

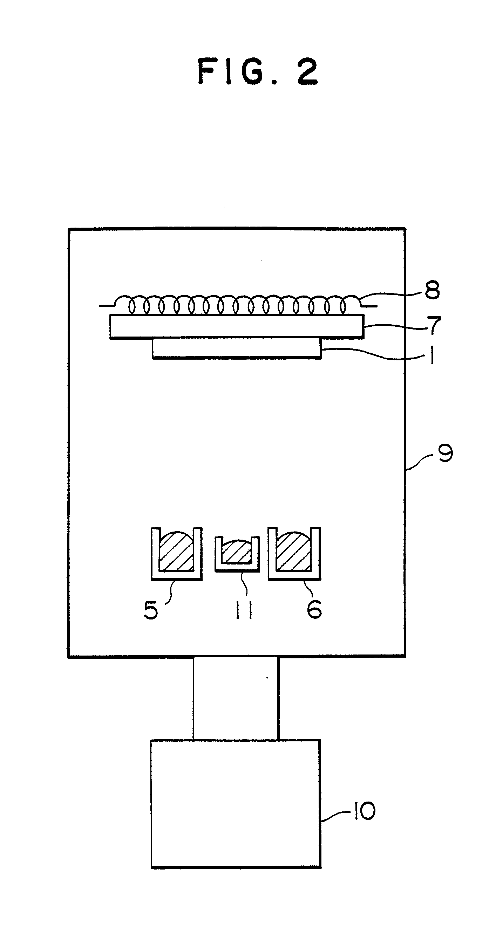

A magnetic recording medium having a metal-polymer composite magnetic film with a cross-sectional structure as shown in Fig. 1 was prepared in a vacuum vapor deposition apparatus as shown in Fig. 2 in the following manner.

A ferromagnetic material evaporation source 5 containing an 80 at % Co-20 at % Cr alloy was heated by electron beam heating and an underlayer 2 of the Co-Cr alloy was formed on a substrate 1 of polyimide film to a thickness of 200 Å while keeping the substrate at room temperature. Then, the ferromagnetic material evaporation source 5 was heated by the same electron beam heating as above to evaporate the Co-Cr alloy and at the same time an organic polymer evaporation source 6 containing polyethylene was heated by resistance heating to evaporate the polyethylene (PE), whereby a composite magnetic film composed of the Co-Cr alloy and the polyethylene was formed on the underlayer 2 to a thickness of 0.2 μm to prepare a magnetic recording medium.

In Figs. 1 and 2, numeral 3 is columnar ferromagnetic particles of Co-Cr alloy, 4 an organic polymer, i.e. the polyethylene, 7 a substrate holder, 8 a heater for heating the substrate, 9 a vacuum chamber, 10 an evacuating system and 11 an underlayer evaporation source.

## Comparative Example 1

A magnetic recording medium was prepared in the same manner as in Example 1 without forming the underlayer of Co-Cr alloy.

## Example 2

Ti or Ge was vapor deposited on a substrate 1 of polyimide film to a thickness of 500 Å at a substrate temperature of 150°C in the same vacuum vapor deposition apparatus as used in Example 1 in the same manner as in Example 1 to form an underlayer. Then, a simple Co metal and polytetrafluoroethylene (PTFE) were vapor deposited onto the underlayer at the same time to prepare a magnetic recording medium having a composite magnetic film composed of Co and PTFE and a thickness of 0.3 μm.

## Comparative Example 2

A magnetic recording medium was prepared in the same manner as in Example 2 without forming the underlayer of Ti or Ge.

## Example 3

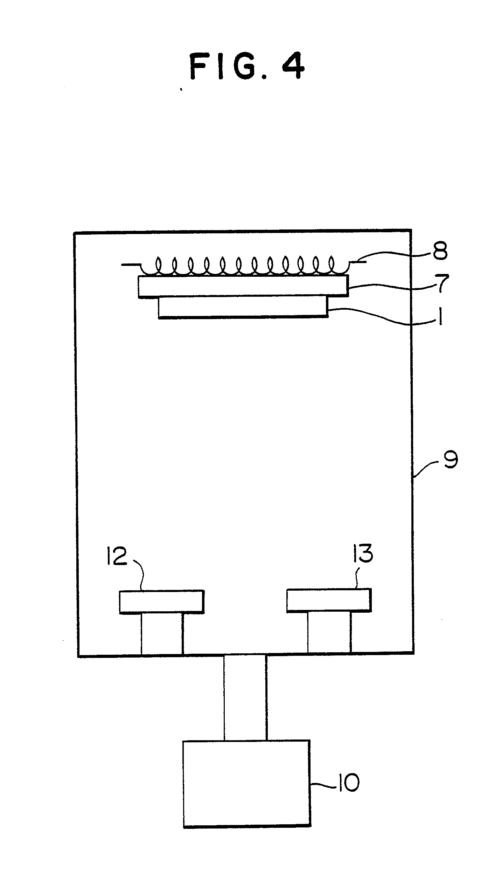

A magnetic recording medium was prepared in a high frequency sputtering apparatus as shown in Fig. 4 in the following manner.

An underlayer target 13 composed of Co-Nb-Zr alloy and a ferromagnetic material-organic polymer composite target 12 comprising a polyester (RES) target, Ekonol (trademark of Carborundum Co.) and 80 at % Co-20 at % Cr pellets placed on the polyester target were provided in a vacuum chamber 9 and subjected to sputtering in an Ar gas pressure of 20 mm Torr and with an applied power of 50 W. At first, the underlayer target 13 of Co-Nb-Zr alloy was sputtered to deposit a film of Co-Nb-Zr alloy onto a glass substrate 1 at room temperature to a thickness of 500 Å, and then the composite target of polyester and Co-Cr alloy was sputtered to form a composite magnetic film composed of the polyester and the 80 at % Co-20 at % Cr alloy on the Co-Nb-Zr underlayer to a thickness of 0.2 $\mu$m. The Co-Nb-Zr alloy in the underlayer was in an amorphous state.

## Comparative Example 3

A magnetic recording medium was prepared in the same manner as in Example 3 without forming the amorphous underlayer of Co-Nb-Zr alloy.

Magnetic characteristics of the magnetic recording media prepared in the foregoing Examples 1 to 3 and Comparative Examples 1 to 3 were measured in a vibrating sample magnetmeter, and the film structure was investigated by a transmission type electron microscope.

Table

| | Under-layer | Satura-tion magneti-zation*) (G) | Coercive force in perpendi-cular direction $Hc\perp$ (Oe) | Squareness ratio in per-pendicular direction $(Mr/Ms)\perp$ | Coercive force in in-plane direction $Hc\,/\!/$ (Oe) | Squareness ratio in-plane direction $(Mr/Ms)\,/\!/$ | Particle size of columnar ferro-magnetic particles (Å) | Composite magnetic film |
|---|---|---|---|---|---|---|---|---|
| Example 1 | Co-Cr | 480 | 400 | 0.20 | 100 | 0.10 | 500 | Co-Cr + PE |
| Comp. Example 1 | None | 540 | 90 | 0.09 | 80 | 0.20 | 50 | Co-Cr + PE |
| Example 2 | Ti | 1000 | 450 | 0.19 | 120 | 0.11 | 450 | Co + PTFE |
| | Ge | 1050 | 410 | 0.21 | 115 | 0.09 | 600 | Co + PTFE |
| Comp. Example 2 | None | 1100 | 80 | 0.08 | 75 | 0.22 | 100 | Co + PTFE |
| Example 3 | Co-Nb-Zr | 480 | 550 | 0.31 | 120 | 0.11 | 800 | Co-Cr + PES |
| Comp. Example 3 | None | 550 | 100 | 0.12 | 80 | 0.23 | 130 | Co-Cr + PES |

*) Apparent saturation magnetization without correction in view of the amount of organic polymer in the sample.

As is apparent from Table, the magnetic recording medium having an underlayer of Co-Cr alloy according to Example 1 has better magnetic characteristics that those of comparative Example 1. The magnetic recording media having an underlayer of Ti or Ge according to Example 2 have much better magnetic characteristics. 3.5-inch floppy disks were prepared from the magnetic recording medium having an underlayer of Ge in Example 2 and from that having no underlayer of Ge in Comparative Example 2, respectively, and their recording-reproduction characteristics were investigated with an amorphous ferrite composite ring head. The results are shown in Fig. 3. As is apparent from Fig. 3, the floppy disk with an underlayer of Ge has very distinguished recording-reproduction characteristics as shown by curve A, as compared with that having no underlayer of Ge as shown by curve B. The magnetic recording medium having an amorphous underlayer of Co-Nb-Zr according to Example 3 also has better magnetic characteristics, as shown in Table.

As described above, a magnetic recording medium having an underlayer for controlling the diameter of columnar ferromagnetic particles in the metal-polymer composite magnetic film according to the present invention has distinguished magnetic characteristics and recording-reproduction characteristics and very high durability and reliability.

**Claims**

1. A magnetic recording medium which comprises a non-magnetic substrate, an underlayer provided on the non-magnetic substrate and a composite magnetic film composed of columnar ferromagnetic particles and an organic polymer surrounding the ferromagnetic particles as a recording magnetic layer, provided on the underlayer the columnar ferromagnetic particles in the composite magnetic film being oriented in a direction substantially perpendicular to the film surface or at a predetermined angle thereto.

2. A magnetic recording medium according to claim 1, wherein the material for the underlayer is substantially the same material as that of the columnar ferromagnetic particles.

3. A magnetic recording medium according to claim 1 wherein the material for the underlayer is at least one of Ti, Ta, Ge and Sc, or an alloy containing these metals as the main components.

4. A magnetic recording medium according to claim 1 wherein the material for the underlayer is a soft magnetic material.

5. A magnetic recording medium according to any one of claims 1 to 4 wherein the underlayer has a thickness of 50 to 5,000 Å.

6. A magnetic recording medium according to claim 1, wherein the columnar ferromagnetic particles for the composite magnetic film is a simple metal of Fe, Co or Ni, or an alloy containing at least one of Fe, Co and Ni as the main component, or an oxide-based magnetic material or a nitride-based magnetic material.

7. A magnetic recording material according to any one of claims 1 to 6 wherein the ferromagentic material is selected from Co, Ni and Fe metal Fe-Co, Fe-Si, Fe-Rh, Fe-V, Fe-Ti, Fe-Co-Cr. Co-P, Co B, Co-Si, Co-V, Co-Y, Co-Sm, Co-Mn, Co-Pd, Co-Pt, Co-Ti, Co-Fe, Co-Ni, Co-Ni-P, Co-Ni-B, Co-Cr, Co-Ni-Cr, Co-Ni-Ag, Co-Ni-Ag, Co-Ni-Pd, Co-Ni-Zn, Co-Cu, Co-Ni-Cu, Co-W, Co-Ni-W, Co-Mn-P, Co-Sm-Cu, Co-Ni-Zn-P, Co-Ni-Mo-Cr and Co-V-Cr alloys; Ba ferrite, $\gamma$-Fe$_2$O$_3$ and Fe$_3$O$_4$: and nitrides of Fe, Co and Ni.

8. A magnetic recording material according any one of claims 1 to 7 wherein the organic polymer is selected from polyethylene, polyethylene terephthalate, polypropylene, polystyrene, polybutadiene, polycarbonate, polyamide, polyimide, polyvinyl chloride, polyvinyl acetate, saturated polyester, unsaturated polyester, polyurethane, silicon-based polymers, polytetrafluoroethylene, copolymers thereof and mixtures thereof.

9. A process for producing a magnetic recording medium comprising a non-magnetic substrate, an underlayer on the non-magnetic substrate and a composite magnetic film composed of columar ferromagnetic particles and an organic polymer surrounding the ferromagnetic particles as a recording magnetic layer on the underlayer the columnar ferromagnetic particles in the composite magnetic film being oriented in a direction substantially perpendicular to the film surface or at a predetermined angle thereto, which process comprises forming the underlayer on the non-magnetic substrate by vapor deposition, and then depositing a ferromagnetic material and an organic polymer onto the underlayer by vapor deposition at the same time, thereby forming a composite magnetic film.

10. A process for producing a magnetic recording medium comprising a non-magnetic substrate an underlayer on the non-magentic substrate and a composite magnetic film composed of columnar ferromagnetic particles and an organic polymer surrounding the ferromagnetic particles as a recording magnetic layer on the underlayer, the columnar ferromagnetic particles in the composite magnetic film being oriented in a direction substantially perpendicular to the film surface or at a predetermined angle thereto, which process comprises forming the underlayer on the non-magnetic substrate by vapor deposition, then depositing a ferromagnetic material onto the underlayer by vapor deposition while injecting gaseous monomers for forming an organic polymer, then irradiating the deposited film with electromagnetic rays or an ionizing beam, thereby polymerizing the monomers into the organic polymer and forming the composite magnetic film on the underlayer.

# FIG. 1

# FIG. 3

A : WITH Ge UNDERLAYER
B : WITHOUT Ge UNDERLAYER

# FIG. 2

# FIG. 4